# FASCICULE DE BREVET EUROPEEN

(11) **EP 3 829 101 B1**
(45) Date de publication et mention de la délivrance du brevet: **27.07.2022**
(21) Numéro de dépôt: 20209836.4
(22) Date de dépôt: 25.11.2020
(51) Int. Cl.: H04L 9/08, H04L 9/14, H04L 9/32, H04L 12/66

(54) **PROCEDE DE SECURISATION DE FLUX DE DONNEES ENTRE UN EQUIPEMENT DE COMMUNICATION ET UN TERMINAL DISTANT, EQUIPEMENT METTANT EN OEUVRE LE PROCEDE**
VERFAHREN ZUR SICHERUNG VON DATEN ZWISCHEN EINER KOMMUNIKATIONSEINRICHTUNG UND EINEM ENTFERNTEN ENDGERÄT
METHOD FOR SECURING DATA FLOWS BETWEEN A COMMUNICATION EQUIPMENT AND A REMOTE TERMINAL

(30) Priorité: 29.11.2019 FR 1913458
(43) Date de publication de la demande: 02.06.2021
(73) Titulaire: SAGEMCOM BROADBAND SAS, 92500 Rueil-Malmaison (FR)
(72) Inventeur: KORBER, Nicolas, 92500 RUEIL MALMAISON (FR); NGUYEN DINH HIEN, Michaël Thien Bao, 92500 RUEIL MALMAISON (FR)
(74) Mandataire: Cabinet Le Guen Maillet

(56) Documents cités:
- US-B1- 6 496 858
- Anonymous: "Remote management", , 1 juin 2010 (2010-06-01), XP055708157, Extrait de l'Internet: URL:https://www.zyxel.ch/de/support/downlo ad/58479_1 [extrait le 2020-06-23]

## Description

### DOMAINE TECHNIQUE

La présente invention concerne les dispositifs pour réseaux informatiques. L'invention concerne plus particulièrement la configuration à distance de dispositifs de communication destinés à la connexion de dispositifs à un réseau informatique, tels que des passerelles, par exemple.

### ETAT DE LA TECHNIQUE ANTERIEURE

Il est fréquent que des dispositifs adaptés pour permettre une connexion à un réseau informatique, tels qu'une passerelle réseau, un routeur, un dispositif de stockage de données ou d'impression, à titre d'exemples non limitatifs, permettent une configuration à distance de certains de leurs paramètres de fonctionnement. Une telle configuration de dispositif à distance, réalisée par l'intermédiaire d'un terminal de configuration distant, utilise fréquemment une interface de gestion pour la saisie ou la modification de paramètres utiles au fonctionnement du dispositif. Ainsi, à titre d'exemple, il peut être utile de pouvoir se connecter à une passerelle d'accès à internet en vue de configurer des paramètres de fonctionnement comme une liste de dispositifs clients autorisés à se connecter, une configuration de réseau local sans fil, des horaires de fonctionnement d'un réseau local sans fil ou encore des paramètres liés à un contrôle parental des accès réalisés. Le terminal de configuration à distance peut être un ordinateur, un smartphone, une tablette ou tout autre dispositif compatible en termes de protocoles d'échange et configuré pour se connecter au dispositif à configurer. La configuration de dispositifs à distance utilise fréquemment un serveur embarqué, dit « serveur web » qui permet de visualiser les paramètres modifiables, à partir d'un terminal de configuration, et de saisir de nouvelles valeurs de paramètres par le biais d'une interface graphique (interface dite « utilisateur ») affichée sur le terminal de configuration. L'avantage d'une utilisation via un serveur web opérant depuis le dispositif à configurer est qu'il est possible de visualiser et modifier des paramètres de configuration à partir d'un terminal de configuration distant mettant en œuvre une application cliente de serveur web, autrement dit un navigateur (dit « navigateur internet »). Si une configuration peut être réalisée lorsque le dispositif configurable et le terminal de configuration sont reliés par un lien physique tel qu'une interface filaire mettant en œuvre un protocole de communication Ethernet, par exemple, l'utilisation massive de connexions sans fil, même dans un contexte local, fragilise la fiabilité des échanges. Ainsi, même en étant physiquement proche d'un dispositif à configurer, une connexion sans fil non sécurisée ne garantit pas que le dispositif destinataire qui opère des échanges en vue d'une configuration est le dispositif réellement ciblé et une usurpation « d'identité » est toujours possible. Par exemple, une usurpation d'identité peut être mise en œuvre à partir d'un dispositif tiers, à portée d'un dispositif à configurer et d'un terminal de configuration. Une telle attaque est bien connue et met en œuvre une technique d'usurpation classiquement nommée « attaque de l'homme du milieu » ou encore « man in the middle » en anglais. Selon cette technique, le dispositif tiers, positionné au centre des échanges entre le dispositif à configurer et le terminal de configuration, se fait passer pour le dispositif à configurer face au terminal, et pour le terminal, face au dispositif à configurer. Dans cette configuration, ni le dispositif à configurer ni le terminal de configuration ne peuvent détecter la présence d'un dispositif central, à même de recevoir des informations sensibles, et d'en faire un usage détourné. Pour résoudre ce problème lors d'échanges sur internet, il est fréquent d'utiliser des méthodes d'authentification et de chiffrement visant d'une part à s'assurer que des échanges ont bien lieu avec un dispositif ciblé et qu'ils puissent être chiffrés de sorte à éviter l'interception par un dispositif tiers de données sensibles qui transitent entre deux dispositifs.

Des techniques existent pour s'affranchir de ces vulnérabilités. Il est par exemple possible de créer un accès sécurisé mettant en œuvre une portion de réseau dite « DMZ » du sigle anglais « Demilitarized Zone » et qui signifie « zone démilitarisée », combinée à un serveur relais, l'ensemble s'appuyant sur un protocole d'échange sécurisé HTTPS entre un serveur web et un client web. Le protocole HTTPS et ses évolutions utilisent des échanges sécurisés. HTTPs est un protocole de transfert hypertextuel sécurisé mettant en œuvre une couche de chiffrement. Cette solution requiert toutefois des éléments d'architecture réseau additionnels pour l'implémentation de la zone dématérialisée et le serveur relais. Une autre technique existe qui utilise un lien de communication parallèle pour l'expédition d'un message d'authentification, tel que l'envoi d'un SMS (du sigle anglais « Short Message System » et qui signifie « système à message court »).

D'autres techniques existent qui visent à utiliser des services tiers mettant à disposition des certificats d'authenticité pour des dispositifs mettant en œuvre un serveur web. Le service tiers distribue des certificats d'authenticité pour des dispositifs dont il se porte garant. De tels certificats sont vérifiables par des dispositifs destinés à se connecter à un serveur web certifié, tel qu'un terminal de configuration, par exemple. Un inconvénient principal est qu'une telle émission de certificat est effectuée en correspondance d'un nom de domaine. Or les dispositifs de connexion à un réseau informatique, tels que par exemple une passerelle, ne sont le plus souvent pas associés à des noms de domaine. Ces dispositifs sont généralement identifiés par le biais d'une adresse IP (du sigle « Internet Protocol » et qui signifie « protocole internet »), cette adresse étant susceptible d'être modifiée, parfois régulièrement. En outre, une mise en œuvre d'un tel service apparaît complexe pour des dispositifs de connexion à un réseau déjà déployés sur le terrain et n'étant pas nativement prévus pour ce faire. Enfin, une configuration ou reconfiguration selon des paramètres définis en usine est parfois requise pour des dispositifs de connexion à un réseau, ce qui rendrait là aussi complexe la mise en œuvre d'une distribution de certificat par un tiers dans la mesure où un retour à des paramètres définis en usine briserait la chaîne de certification créée et nécessiterait alors une nouvelle certification. La complexité de mise en œuvre de tels services tiers d'authentification n'est pas adaptée à une sécurisation des échanges entre des dispositifs de connexion à un réseau largement déployés sur le terrain et des terminaux. De surcroît, un tel service ne répond pas au risque d'usurpation d'identité dans un réseau local non connecté à internet et mettant en œuvre des connexions sans fil. La situation peut donc être améliorée.

### EXPOSE DE L'INVENTION

La présente invention vise notamment à sécuriser l'authentification d'échanges avec un dispositif de communication et la sécurisation de flux de données avec ce même dispositif, à partir d'un terminal de configuration distant.

A cet effet, l'invention a pour objet de proposer un procédé de sécurisation de flux de données dans un dispositif de communication configurable depuis un terminal de configuration distant, le procédé comprenant les étapes :
- enregistrer une première clé de chiffrement dans une mémoire dudit dispositif (100),
- générer et enregistrer une seconde clé de chiffrement, dite clé privée, et une troisième clé de chiffrement, dite clé publique, la clé publique étant insérée dans un certificat d'authenticité signé par la première clé, la clé publique étant utilisable pour le chiffrement d'un flux de données déchiffrable au moyen de la clé privée,

- recevoir, depuis le terminal distant, une requête en vue de sécuriser des échanges entre ledit dispositif et le terminal distant,
- vérifier que ladite requête est reçue via ladite première interface,
- si ladite requête est reçue via ladite première interface, émettre, par ledit dispositif, la clé publique vers le terminal distant, en réponse à la requête et autoriser une configuration à distance dudit dispositif via au moins la seconde interface, à partir de flux de données chiffrées au moyen de ladite clé publique.

Avantageusement, il est possible, grâce à la transmission d'une clé publique utilisable pour le chiffrement d'un flux de données déchiffrables au moyen de la clé privée, de réaliser une authentification du dispositif de communication configurable à distance par le terminal de configuration. Pour ce faire, un certificat d'authentification, signé par la première clé, est adressé avec la clé publique. Ce certificat d'authentification est généré en même temps que la clé publique. Ce certificat contient des informations telles que, par exemple, sa durée de vie, ainsi que des informations représentatives de l'équipement de communication qui l'émet. De façon tout aussi avantageuse, il est possible d'utiliser la clé publique reçue pour le chiffrement de tout ou partie des données à émettre vers le dispositif de communication configurable à distance.

Le terme réseau local privé est à interpréter ici comme un réseau de type LAN (du sigle anglais « Local Area Network ») qui relie des dispositifs ou ordinateurs dans une même zone limitée comme un logement, un bâtiment ou un immeuble résidentiel, une entreprise, un laboratoire, une école ou une université, par opposition à un réseau étendu de type WAN (du sigle anglais « Wide Area Network ») qui relie des dispositifs ou ordinateurs situés dans un territoire étendu, typiquement une région, un pays, un ensemble de pays, voire à l'échelle de la planète, tel qu'internet, par exemple.

Dans un réseau WAN, des dispositifs ou ordinateurs peuvent être respectivement connectés à des branches de différents réseaux de type LAN et connectés entre eux au moyen de dispositifs intermédiaires comme des routeurs, nœuds de connexion ou passerelles domestiques, par exemple.

Le procédé selon l'invention peut également comporter les caractéristiques suivantes, considérées seules ou en combinaison :
- Le procédé comprend une étape d'authentification du dispositif de communication vis-à-vis du terminal de configuration distant ou vice-versa.
- Le procédé comprend une étape de chiffrement d'un flux de données à transmettre, entre le dispositif de communication et le terminal distant, le chiffrement étant réalisé au moyen de la clé publique.
- L'étape d'émission de la clé publique vers le terminal de configuration distant comprend en outre une émission de la clé publique vers un dispositif de stockage distant. Un autre objet de l'invention est de proposer un dispositif de communication configurable depuis un terminal distant, le dispositif de communication étant configuré pour
- i) enregistrer une première clé de chiffrement dans une mémoire dudit dispositif,
- ii) générer et enregistrer une seconde clé de chiffrement, dite clé privée, et une troisième clé de chiffrement, dite clé publique, la clé publique étant insérée dans un certificat d'authenticité signé par la première clé, et la clé publique étant utilisable pour le chiffrement d'un flux de données déchiffrables au moyen de la clé privée,
- iii) recevoir, depuis le terminal distant, une requête en vue de sécuriser des échanges entre ledit dispositif et le terminal distant via un réseau local privé,
- iv) émettre la clé publique depuis ledit dispositif vers le terminal distant via un réseau local privé.

Le dispositif de communication peut en outre comporter l'une ou plusieurs des caractéristiques suivantes, prises seules ou en combinaison :
- Le dispositif de communication est destiné à l'exécution de fonctions de passerelle de connexion entre le réseau local et un réseau étendu.
- Le dispositif de communication est configuré pour opérer une modification d'au moins un registre de configuration à partir de données reçues chiffrées par l'exécution d'un algorithme de chiffrement utilisant la clé publique et déchiffrables par l'exécution d'un algorithme de déchiffrement utilisant la clé privée.
- Le dispositif de communication est configuré pour l'implémentation d'un serveur web permettant une modification d'au moins un registre de configuration via l'utilisation d'une interface graphique affichée sur le terminal distant.
- L'interface graphique, contrôlée par le dispositif de communication, est adaptée à la saisie d'une commande de sécurisation de flux de données entre le dispositif de communication et le terminal de configuration distant.

Un autre objet de l'invention est un système de communication comprenant un dispositif de communication configurable à distance et un terminal de configuration distant, le dispositif de communication et le terminal de configuration distant étant configurés pour être connectés à un même réseau et pour :
- enregistrer, par le dispositif, une première clé de chiffrement dans une mémoire du dispositif,
- générer et enregistrer, par le dispositif, une seconde clé de chiffrement, dite clé privée, et une troisième clé de chiffrement, dite clé publique, la clé publique étant insérée dans un certificat d'authenticité signé par la première clé, la clé publique étant utilisable pour le chiffrement d'un flux de données déchiffrables au moyen de la clé privée,
- recevoir, par le dispositif et depuis le terminal de configuration, une requête en vue de sécuriser des échanges entre le dispositif de communication et le terminal de configuration distant,
- vérifier, par le dispositif de communication, que la requête est reçue via la première interface configurée pour une connexion à un réseau local,
- si ladite requête est reçue via ladite première interface, émettre, par le dispositif de communication, la clé publique vers le terminal de configuration distant, en réponse à la requête et autoriser une configuration à distance du dispositif de communication via au moins la seconde interface à partir de flux de données chiffrées au moyen de la clé publique. L'invention a en outre pour objet un produit programme d'ordinateur comprenant des instructions de codes de programme pour exécuter les étapes du procédé susmentionné, lorsque le programme est exécuté sur un ordinateur, ainsi qu'un dispositif de stockage d'informations comprenant un tel produit programme d'ordinateur. Le terme ordinateur est à interpréter ici largement et comme applicable à tout dispositif électronique comprenant une unité de contrôle, un ou plusieurs modules de mémoire et un ou plusieurs modules d'interface réseau adaptés à une connexion de dispositifs distants tels qu'un terminal de configuration à distance, outre l'ensemble usuel des circuits utiles au fonctionnement des éléments cités (alimentation en énergie, circuit de remise à zéro, circuits d'horloge, etc.).

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un dispositif de communication opérant des fonctions de passerelle d'accès entre un premier réseau local privé LAN et un second réseau, mettant en œuvre un procédé de sécurisation de flux de données transmises entre un terminal de configuration distant et
le dispositif de communication, selon un mode de réalisation particulier et non limitatif de l'invention.
[Fig. 2] est une représentation schématique de l'architecture du dispositif de communication déjà représenté sur la Fig. 1.
[Fig. 3] est un diagramme représentant un procédé de sécurisation de flux de données selon l'invention, implémenté par le dispositif de communication déjà représenté sur les Fig. 1 et Fig. 2.

### EXPOSE DETAILLE DE MODES DE REALISATION

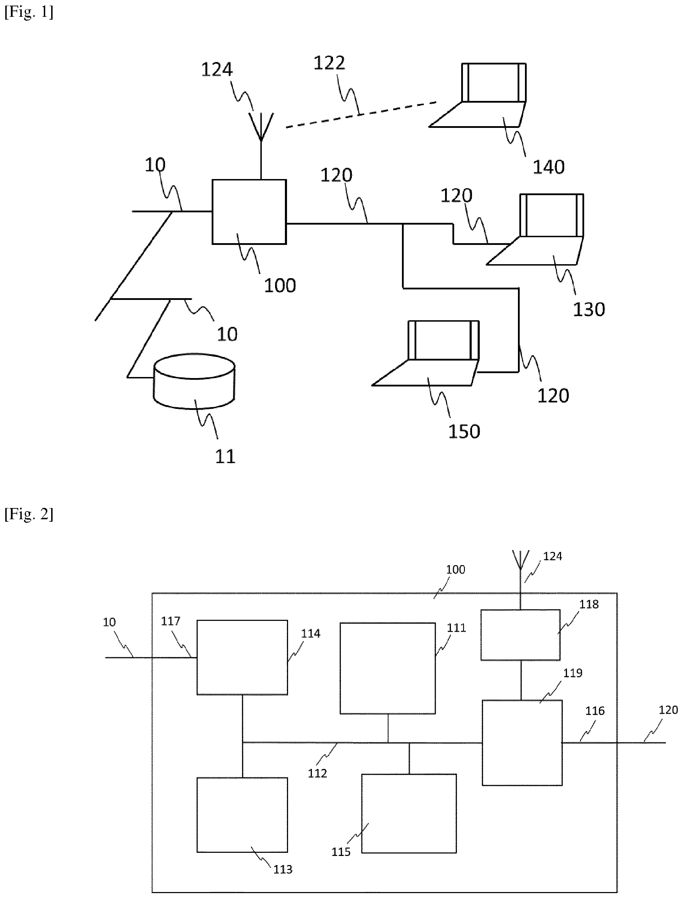

La Fig. 1 illustre un dispositif de communication 100 adapté à la mise en œuvre de fonctions de passerelle d'interconnexion entre un réseau 10 et un réseau local privé 120.

Le réseau local privé 120 est un réseau de type LAN. Selon un mode de réalisation préféré de l'invention, le réseau 10 est un réseau étendu de type WAN. Selon une variante, le réseau 10 peut être un réseau local de type LAN. Le dispositif de communication comprend une interface de connexion sans fil au réseau de type LAN 120 par le biais d'un système antennaire 124. Cette interface de connexion sans fil est configurée pour l'établissement d'une connexion sans fil 122 entre l'équipement de communication 100 et un ordinateur distant 140. Le réseau LAN 120 est configuré pour interconnecter une pluralité de dispositifs. Selon l'exemple décrit, le réseau LAN 120, de type local et privé, est configuré pour interconnecter le dispositif de communication 100, l'ordinateur 130, l'ordinateur 140 et un terminal de configuration à distance 150.

Ainsi, le dispositif de communication 100 opérant des fonctions de passerelle réseau entre le réseau 100 et le réseau 10 permet, par exemple, l'établissement de flux de données entre un dispositif de stockage de données 11 connecté au réseau étendu 10 et l'ordinateur 130 connecté au réseau local privé 120. Le terminal de configuration 150 est par exemple un ordinateur configuré pour exécuter une application de navigateur web susceptible de se connecter à un serveur web distant identifié par son adresse IP ou encore par un nom de domaine. Lorsque le serveur web distant est identifié par un nom de domaine, le nom de domaine est résolu par un serveur de noms de domaine distant (serveur DNS, du signe anglais « Domain Name Server » et qui signifie « serveur de résolution de noms de domaine ») non représenté sur la figure. Le dispositif de communication 100 opérant des fonctions de passerelle réseau peut être configuré à distance. Certains paramètres de fonctionnement du dispositif de communication 100 sont modifiables par modifications de valeurs ou de données accessibles via des registres de configurations. Ces données sont par exemple des plages horaires de fonctionnement d'une interface wifi permettant une connexion sans fil d'un ordinateur au dispositif de communication 100 en vue d'un accès à des serveurs distants accessibles par l'intermédiaire du réseau WAN 10. En d'autres termes, il s'agit de définir, par exemple, des plages horaires autorisant l'accès à internet à un ou plusieurs ordinateurs connectés au réseau local privé 120. Ces données sont stockées dans une ou plusieurs mémoires non volatiles lors d'une mise hors tension du dispositif de communication 100. Ainsi, une configuration peut être rétablie après une remise sous tension du dispositif de communication 100. La configuration du dispositif de communication 100 est simplifiée par la mise à disposition d'une interface de configuration, encore appelée interface de gestion ou interface de gestion de configuration, implémentée dans le dispositif de communication 100, opérant sous contrôle d'une unité de contrôle interne, sous la forme d'un serveur web mettant en œuvre un protocole hypertextuel non sécurisé (le protocole HTTP, par exemple). Le serveur web embarqué dans le dispositif de communication 100 permet d'afficher des menus de configuration sous la forme d'une interface utilisateur graphique sur un écran de l'ordinateur terminal de configuration distant 150 exécutant une application de navigateur web, connecté au serveur web de configuration du dispositif de communication 100. Par exemple, un utilisateur désireux de modifier des paramètres de fonctionnement du dispositif de communication 100 utilisera l'application navigateur web du terminal de configuration distant 150 et ciblera le serveur web en l'identifiant par son adresse IP : 192.168.1.1. En effet, l'adresse IP 192.168.1.1 est largement définie comme donnant accès à des paramètres de configuration d'un dispositif de communication de type passerelle réseau utilisable pour l'interconnexion d'un réseau privé local LAN, câblé ou sans fil et un réseau étendu WAN.

Les différentes options de configuration du dispositif de communication 100 sont ainsi rendues accessibles depuis le terminal de configuration distant 150, par le biais de menus de configuration et de champs de saisie représentés et implémentés via l'interface graphique affichée par le navigateur web du terminal de configuration distant 150. Le terminal de configuration distant 150 comprend au moins un écran d'affichage et une interface d'entrée pour la saisie de paramètres, telle que, par exemple un clavier, une souris, un stylet ou encore un dispositif tactile, éventuellement combiné à l'écran. La mise en œuvre des menus de configuration est réalisée par des échanges entre le serveur web du dispositif de communication 100 et l'application navigateur web du terminal de configuration à distance 150. Ces échanges constituent des flux de données entre le dispositif de communication 100 et le terminal de configuration à distance 150. Selon le mode de réalisation préféré, les échanges utiles à la configuration du dispositif de communication 100 sont opérés selon un protocole de communication hypertextuel HTTP ou l'une quelconque de ses évolutions. Selon une variante, la connexion entre le dispositif de communication 100 et le terminal de configuration distant 150 est établie par la mise en œuvre d'un protocole de communication sécurisé de type SSH ou l'une quelconque de ses évolutions.

Selon le mode préféré de réalisation de l'invention, l'interface de configuration (ou interface de gestion) comprend un champ de configuration adapté à la mise en œuvre d'un procédé de sécurisation des flux de données entre le terminal de configuration 150 et le dispositif de communication 100 sous la forme d'une case à cocher combinée à une indication de la fonction de la case à cocher (soit, la mise en œuvre d'une sécurisation des flux de données). Avantageusement, la sécurisation des flux de données mise en œuvre selon l'invention comprend l'authentification du dispositif de communication 100 par le terminal de configuration 150 et le chiffrement des flux de données entre ces deux dispositifs pour s'affranchir des risques d'interception de données sensibles, et garantir que le dispositif auquel est connecté le terminal de configuration 150 est réellement le dispositif de communication 100 et non pas un dispositif autre, situé à portée du terminal de configuration 150 et/ou du dispositif de communication 100, et opérant une attaque du type de l'attaque de l'homme du milieu.

Le dispositif de communication 100 comprend une première clé de chiffrement mémorisée dans une mémoire interne non volatile, réservée à cet effet. Par exemple, la mémoire interne est intégrée à un circuit microcontrôleur dédié à une unité de contrôle du dispositif de communication 100 de sorte à rendre impossible un accès à la clé. Cette clé de chiffrement, dite clé « racine », est utilisée pour signer un certificat d'authenticité généré dans l'équipement de communication 100, comprenant un condensat obtenu à partir d'informations uniques du dispositif de communication 100 et dans lequel est insérée la clé publique utilisée pour une authentification à venir. La première clé de chiffrement peut avoir été programmée en usine lors de la fabrication du dispositif de communication 100 ou encore avoir été téléchargée lors d'une mise à jour du logiciel bas niveau exécuté par une unité de contrôle du dispositif de communication 100 et mettant en œuvre, entre autres, des fonctions d'interconnexion du dispositif, propres à une passerelle réseau entre un réseau LAN et un réseau WAN. Ce logiciel bas niveau est communément appelé « *firmware* ».

Une mise en œuvre d'un procédé selon l'invention est ci-après décrite. Lorsqu'un utilisateur du terminal de configuration 150, désireux de pouvoir opérer une configuration du dispositif de communication 100, de façon sécurisée, c'est-à-dire en étant capable d'authentifier le dispositif de communication 100 pour éviter une usurpation « d'identité » par un dispositif tiers, et de chiffrer les flux de données entre le terminal de configuration 150 et le dispositif de communication 100, il coche la case de saisie prévue dans l'interface graphique utilisateur aux fins de solliciter la sécurisation des flux de données. Un message représentatif de cette commande est alors transmis au serveur web embarqué dans le dispositif de communication 100, lequel message constitue une requête en vue de sécuriser des échanges entre le dispositif de communication 100 et le terminal de configuration distant 150. La requête est stockée dans une mémoire tampon de l'interface de gestion embarquée dans le dispositif de communication 100 et traitée immédiatement après par l'unité de contrôle du dispositif de communication 100 qui génère une paire de clés e_{c} et d_{d} respectivement publique et privée, pour le chiffrement et le déchiffrement des flux de données entre le terminal de configuration distant 150 et le dispositif de communication 100. L'unité de contrôle génère ensuite une autre paire de clés eₐ et dₐ, respectivement publique et privée, éventuellement chaînées avec la première clé dite clé racine, respectivement utilisables pour l'authentification du dispositif de communication 100. Ainsi, conformément au fonctionnement des systèmes de chiffrement à clés publiques utilisés en cryptographie asymétrique, si C est une fonction de chiffrement prédéterminée et D est une fonction de déchiffrement prédéterminée, alors, pour tout message m d'un flux de données à transmettre, m = C ( D ( m , d_{d}), e_{c} ). Un schéma de signature est ainsi construit à partir de ce système de cryptographie.

La signature d'un message m est s = D ( h (m), d) où h est une fonction de hachage publique, résistante aux collisions. La signature s peut être vérifiée en comparant h (m) à C (s , e_{c}). Selon une variante, une fonction de redondance peut être utilisée plutôt qu'une fonction de hachage. La clé publique d'authentification eₐ est intégrée à un certificat d'authentification disponible pour un utilisateur du terminal de configuration à distance. Un message est transmis par le serveur web de l'interface de gestion du dispositif de communication 100 qui invite l'utilisateur du terminal de configuration 150 distant à télécharger ce certificat eₐ en vue d'une utilisation ultérieure. Le certificat d'authentification (comprenant la clé publique d'authentification eₐ) est ensuite téléchargé et enregistré dans une mémoire non volatile du terminal de configuration distant 150.

Selon une variante, le procédé n'est pas limité à un chaînage à un seul niveau et peut impliquer une chaîne de certificats, obtenus itérativement à partir des certificats précédemment créés, pour renforcer la procédure d'authentification.

De façon similaire, la clé publique de chiffrement e_{c} est transmise au terminal de communication à distance 150 en réponse au message de requête en sécurisation des flux de données entre le dispositif de communication 100 et le terminal de configuration distant 150, précédemment envoyé par le terminal de configuration 150. La clé publique de chiffrement e_{c} est elle aussi enregistrée dans une mémoire non volatile du terminal de configuration distant 150. La mémoire du terminal de configuration distant 150 où est enregistré le certificat d'authentification eₐ créé par le dispositif de communication 100 correspond, par exemple, à un « magasin de certificats » du navigateur web du terminal de configuration 150.

Les clés privées dₐ et d_{d} respectivement nécessaires à l'authentification du terminal de configuration 150 et/ou du dispositif de communication 100 et au déchiffrement des flux de données entre le terminal de configuration à distance 150 et le dispositif de communication 100 ne sont quant à elles pas transmises, et sont stockées de manière sécurisée dans le dispositif de communication 100. Ces clés sont par exemple stockées dans une partition de mémoire dédiée, ou bien localement chiffrées grâce à un mécanisme de chiffrement matériel. Par exemple, le chiffrement matériel peut être réalisé par le biais d'un mécanisme de chiffrement localisé et implémenté dans un composant dédié, la version chiffrée de la clé étant alors stockée dans une zone mémoire à laquelle il n'est pas possible d'accéder directement, mais uniquement à travers le module de chiffrement / déchiffrement de la clé. Après réception et enregistrement du certificat d'authentification eₐ et de la clé publique de chiffrement e_{c}, une sécurisation des flux de données peut être réalisée entre le dispositif de communication 100 et le terminal de configuration distant 150.

Le certificat d'authentification eₐ est créé à partir d'une ou plusieurs informations uniques du dispositif de communication 100. De façon préférentielle, le certificat d'authentification eₐ est créé à partir d'un nombre important d'éléments tendant à conférer un caractère unique au certificat d'authentification eₐ. Les informations uniques utilisées pour la génération du certificat d'authentification eₐ sont, à titre d'exemples, non limitatives : un numéro de série du dispositif de communication 100, un ou plusieurs identifiants uniques de composants électroniques implémentés dans l'architecture matérielle du dispositif de communication 100, un code représentatif d'un pays d'utilisation et/ou d'une région d'utilisation du dispositif de communication 100, une adresse IP vue du réseau WAN 10, une adresse de type MAC d'une interface réseau du dispositif de communication 100, ou encore une chaîne de caractères représentant un e-mail de contact mémorisé dans une zone mémoire du dispositif de communication 100.

Selon une variante du mode de réalisation, des informations saisies par l'utilisateur du terminal de configuration distant 150 préalablement à la génération du certificat d'authentification eₐ sont utilisées pour sa génération. Ces informations sont, par exemple, des réponses à des questions prédéterminées. Dans le cas où l'établissement du certificat d'authentification eₐ utilise une information susceptible de changer, telle qu'une adresse IP, par exemple, un nouveau certificat devra être généré. Chaque nouveau certificat requerra d'avoir à mettre en œuvre le procédé de sécurisation selon l'invention.

Selon un second mode de réalisation de l'invention, un chaînage de certificats à deux ou plusieurs niveaux est réalisé. Ainsi, un premier certificat d'authentification dit « certificat d'authentification racine » ou « certificat racine » est créé et un certificat d'authentification dit « certificat de service », chaîné au certificat racine, est créé pour la gestion de la configuration. Selon cette variante, c'est ce certificat de service qui sera alors transmis au terminal de configuration distant 150 après réception d'un message de requête en sécurisation des flux de données par le dispositif de communication 100.

Selon l'invention, il est impératif que les étapes de réception d'une requête en vue de sécuriser des flux de données entre le dispositif de communication 100 et le terminal de configuration distant 150, émise par le terminal de configuration distant 150, et d'émission de la clé publique eₐ utilisable en vue d'une authentification, soient exécutées lorsque les deux dispositifs sont connectés à un même réseau local privé. En effet, cette caractéristique garantit l'authenticité du certificat et de son usage ultérieur. Il est entendu par une connexion à un même réseau local privé, une connexion de point à point préservée d'une intrusion ou d'une interception de données par l'utilisation d'un dispositif tiers. Une telle connexion des deux dispositifs que sont le dispositif de communication 100 et le terminal de configuration distant 150 à un même réseau local privé est par exemple réalisée au moyen d'un lien physique mettant en œuvre une communication selon un protocole Ethernet ou l'une quelconque de ses évolutions, ou encore une connexion sécurisée et cryptée à travers un réseau local privé sans fil sécurisé.

Avantageusement, et grâce à la mise en œuvre du procédé selon l'invention, il est possible d'initier des communications sécurisées, mettant par exemple en œuvre le protocole HTTPS, immédiatement après l'exécution du procédé selon l'invention, ou ultérieurement, avec le terminal configurable à distance connecté au dispositif de communication en dehors d'un même réseau local privé. Avantageusement encore, le dispositif de communication est configuré nativement (en sortie d'usine) pour ne pas autoriser une configuration à distance par le biais de son interface de connexion au réseau WAN 10, et la transmission d'une clé publique depuis le dispositif de communication 100 vers le terminal de configuration 150 est accompagnée d'une reconfiguration de l'équipement de communication 100 visant à permettre une configuration ultérieure à distance par le biais de son interface de connexion au réseau WAN 10, à partir de flux de données chiffrées par la clé publique transmise. Des échanges utilisant le protocole HTTPS peuvent alors être réalisés lorsque le terminal de configuration distant 150 est par exemple connecté à un autre réseau privé LAN, relié au réseau étendu WAN10 à travers une passerelle autre que le dispositif de communication 100. Ainsi, lorsque le terminal de configuration à distance 150 est connecté à n'importe quelle branche d'internet, il peut établir une connexion chiffrée avec le dispositif de communication 100 au moyen de son application navigateur web et du serveur web embarqué dans le dispositif de communication 100. L'établissement de la connexion se fait en utilisant l'adresse IP du dispositif de communication 100 et un numéro de port dédié à des échanges sécurisés, soit en utilisant un nom de domaine résolu par un serveur de nom de domaine traduisant le nom de domaine en adresse IP. Le terminal de configuration distant 150 vérifie alors l'authenticité du dispositif de communication 100 en utilisant le certificat d'authentification signé par la clé racine (première clé), et la clé publique eₐ. L'authentification du dispositif de communication 100 par le terminal de configuration distant 150 utilise un déchiffrement d'un condensat chiffré inséré dans le certificat transmis au terminal de configuration distant 150, à l'aide de la clé publique elle-même insérée au certificat. Le condensat est une empreinte numérique obtenue par une fonction de hachage. Lors de l'authentification du dispositif de communication 100, le condensat déchiffré est comparé avec les condensats obtenus à partir d'informations uniques relatives au dispositif de communication 100. Si les deux condensats sont identiques, alors il est considéré que le certificat d'authentification est authentique, c'est-à-dire qu'il a bien été signé par la clé racine de l'équipement de communication 100. Une fois que le dispositif de communication 100 est authentifié par le terminal de configuration distant 150, un canal de communication chiffré est mis en œuvre entre le terminal de configuration 150 et le dispositif de communication 100. Pour ce faire, les flux de données à transmettre sont chiffrés au moyen de la clé publique e_{c} avant émission vers le dispositif de communication 100 et déchiffrés à la réception, par le dispositif de communication 100 utilisant la clé privée d_{d}.

La **Fig. 2** illustre l'architecture interne de l'équipement de communication 100 configuré pour opérer des fonctions de passerelle réseau entre le réseau WAN 10 et le réseau LAN 120. Le dispositif de communication 100 comprend une unité de contrôle 111. L'unité de contrôle 111 comprend une circuiterie électronique configurée pour exécuter des fonctions usuelles de passerelle entre deux réseaux. Selon un mode de réalisation préféré de l'invention, l'unité de contrôle comprend un microprocesseur. L'unité de contrôle 111 est connectée à un module de mémoire non volatile 113 par le biais d'un bus partagé 112. Le module de mémoire 113 comprend des zones de mémoire dédiées au stockage de codes logiciels exécutables en correspondance des fonctions implémentées par l'équipement de communication 100. Un module de mémoire vive 115 est également connecté à l'unité de contrôle 111 par le biais du bus partagé 112, et sert notamment à l'exécution des codes logiciels précités. L'unité de contrôle 111, le module de mémoire non volatile 113 et le module de mémoire vive 115 sont donc reliés entre eux par le bus partagé 112 auquel sont également connectées une interface de connexion 119 à un réseau LAN et une interface de connexion 114 à un réseau étendu WAN. L'interface de connexion 119 est par exemple une interface filaire de type Ethernet. Une telle interface Ethernet amène un niveau de sécurité élevé, surtout lorsque le terminal de configuration distant 150 est directement connecté à l'équipement de communication 100 par le biais de cette interface au moyen d'un câble. L'interface de connexion 119 à un réseau LAN est par ailleurs connectée à un module de communication sans fil 118 comprenant le système antennaire 124. Une telle interface amène aussi un niveau de sécurité élevé, lorsqu'une connexion directe est établie avec le terminal de configuration à distance 150, au moyen d'un chiffrement. Le module de mémoire non volatile 113 comprend un ensemble de zones dédiées à la configuration de l'équipement de communication 100. Ces zones contiennent des valeurs de paramètres utiles à la configuration de l'équipement de communication 100 selon plusieurs modes de fonctionnement. Chacun des paramètres peut être modifié par réécriture de la zone de mémoire non volatile qui lui correspond. La modification d'un paramètre est réalisable sous contrôle de l'unité de contrôle 111, notamment lorsque l'unité de contrôle exécute l'interface de gestion de la configuration de l'équipement de communication 100.

Lorsque l'unité de contrôle 111 exécute l'interface de gestion de la configuration de l'équipement de communication 100, elle exécute des fonctions de serveur web adapté à l'affichage d'une page web, dédiée à la configuration, sur un terminal distant tel que le terminal de configuration 150 connecté au dispositif de communication 100 par l'intermédiaire de l'interface de connexion 119 (réseau LAN) ou de l'interface de connexion 114 (réseau WAN). Selon un mode de réalisation préféré de l'invention, l'équipement de communication 100 est configuré nativement pour que la configuration à distance ne puisse être réalisée que via l'interface réseau 119 ou l'interface réseau 118 mettant en œuvre une communication sécurisée (chiffrée), et ce jusqu'à l'exécution du procédé de sécurisation de flux de données selon l'invention. En d'autres termes, la configuration à distance de l'équipement de communication 100 à travers un réseau WAN connecté à l'interface réseau WAN est inhibée lors de la configuration de la passerelle réseau en usine, ou lors d'un retour à une configuration dite « usine ».

L'équipement de communication 100 est ainsi adapté à l'exécution du procédé de sécurisation de flux de données selon l'invention.

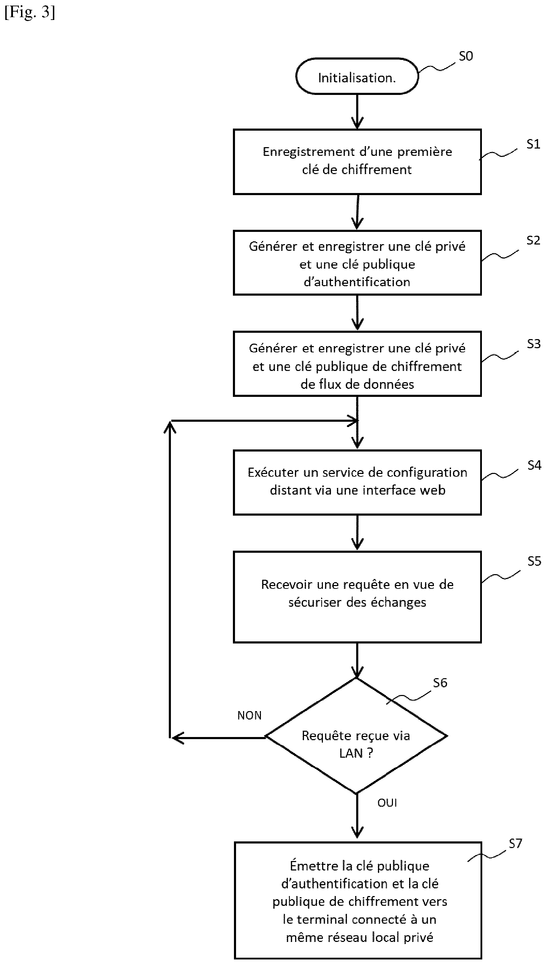

La **Fig. 3** est un ordinogramme illustrant un procédé de sécurisation de flux de données entre l'équipement de communication 100 et le terminal de configuration distant 150 selon un mode de réalisation particulier et non limitatif de l'invention. Une initialisation générale du dispositif de communication 100 a lieu lors d'une étape S0. Lors de cette initialisation générale, le dispositif de communication 100 est configuré pour pouvoir réaliser un ensemble de fonctions utiles à l'implémentation d'une passerelle réseau entre un premier réseau de type LAN connecté à l'interface réseau 119, et un second réseau, de type LAN ou WAN connecté à l'interface réseau 117. A la fin de cette étape, l'équipement de communication est apte, après une phase de mise en route, à exécuter des fonctions de passerelle réseau et à exécuter une interface de gestion de configuration à distance par l'implémentation d'un serveur web de configuration, accessible via l'interface de connexion réseau LAN 119. A ce stade, l'équipement de communication 100 ne peut être configuré à distance de manière sécurisée par l'intermédiaire de son interface réseau 114, cette capacité étant nativement inhibée. Un enregistrement d'une première clé de chiffrement, dite clé racine, est réalisé lors d'une étape S1. Selon un mode de réalisation de l'invention, cet enregistrement est opéré lors de la fabrication en usine. Selon une variante, cet enregistrement de clé racine est réalisé par téléchargement, lors d'une opération de configuration sécurisée ultérieure à la fabrication, telle qu'une opération de maintenance, par exemple.

Une première génération d'une paire de clés privée / publique est ensuite réalisée lors d'une étape S2, ainsi qu'une seconde génération de clés privée / publique lors d'une étape S3. La première paire de clés est prévue pour des opérations d'authentification et la seconde paire de clés est prévue pour des opérations de chiffrement. Ces générations de paires de clés publiques et privées sont réalisées, par exemple, lors de la première mise sous-tension de l'équipement de communication 100 ou encore ultérieurement lors d'une opération de configuration, de reconfiguration ou de maintenance.

Une exécution de l'interface de gestion de configuration a lieu lors d'une étape S4, lorsque le terminal de configuration distant 150 se connecte au serveur web de configuration de l'équipement de communication 100, via l'interface réseau 119. Cette exécution est réalisée par l'échange de messages protocolaires, par exemple, selon le protocole HTTP, et permet l'affichage d'une page web de configuration de l'équipement de communication 100 sur un écran du terminal de configuration 150. La page web de configuration est adaptée à la mise en œuvre de menus de configuration, permettant la définition de paramètres de configurations mémorisés dans des registres de configurations de l'équipement de communication 100 ou dans les zones de mémoire non volatile dédiées à cet effet. Typiquement, la page web permet pour un utilisateur manipulant le terminal de configuration à distance 150 de choisir des paramètres et d'ajuster leurs valeurs respectives. Selon un mode de réalisation préféré de l'invention, la page web de configuration permet également d'activer ou de désactiver des fonctions en cochant des cases associées à une description de la fonction. Ainsi, la page web comprend une fonction activable en cochant une case et intitulée « sécurisation des flux de données pour la configuration à distance ».

Lorsqu'un utilisateur du terminal de configuration à distance 150 sollicite l'activation de la sécurisation des flux de données entre le terminal de configuration à distance 150 et l'équipement de communication 100, en cochant la case de la page web de configuration, le terminal de configuration 150 émet une requête HTTP vers l'équipement de communication 100, en vue de solliciter la sécurisation des échanges ultérieurs par des opérations d'authentification et de chiffrement des flux de données, et ce jusqu'à ce qu'une reconfiguration autorise éventuellement à nouveau des échanges non sécurisés.

La requête en vue de sécuriser les flux de données est alors reçue par l'équipement de communication lors d'une étape S5.

Astucieusement, l'équipement de communication 100 teste, dès réception de la requête en vue d'une sécurisation des flux de données entre l'équipement de configuration à distance et lui-même, si la requête a été réceptionnée via l'interface réseau LAN 119 ou l'interface réseau WLAN 118, ou encore via l'interface réseau 114, utilisable pour une connexion à un réseau étendu de type WAN.

Si la requête a été reçue par l'intermédiaire de l'interface réseau LAN 119, et par le biais d'un port Ethernet 116, c'est-à-dire d'une connexion par câble traduisant un niveau de sécurité élevé, l'équipement de communication 100 transmet, en réponse à la requête, les clés publiques de chiffrement et d'authentification au terminal de configuration à distance 150. Dans le cas contraire, l'équipement de communication ne transmet pas les clés publiques et adresse un message d'erreur via la page web de l'interface de gestion de la configuration, visant à indiquer que la sécurisation des flux de données n'est pas possible. Selon une variante du mode de réalisation, l'équipement de communication 100 teste, dans le cas où la requête en vue de sécuriser les flux de données n'a pas été réceptionnée via l'interface réseau LAN 119 et le port Ethernet 116, si la requête a été reçue via l'interface réseau WLAN 118 opérant des échanges chiffrés avec le terminal de configuration distant 150. Selon cette variante, l'équipement de communication 100 considère que les échanges avec le terminal de configuration 150 sont réalisés avec un niveau de sécurité suffisamment élevé et transmet, en réponse à la requête, les clés publiques de chiffrement et d'authentification au terminal de configuration à distance 150. A défaut, l'équipement de configuration adresse un message d'erreur via la page web de l'interface de gestion de la configuration, visant à indiquer que la sécurisation des flux de données n'est pas possible. Dans le cas où la sécurisation des flux de données n'est pas permise et que les clés publiques ne sont pas envoyées, l'équipement de communication se positionne dans l'attente d'une nouvelle requête de configuration à distance. Cette nouvelle requête peut être une requête visant à sécuriser les flux de données ou une autre requête en configuration.

Outre la transmission des clés publiques de chiffrement et d'authentification, l'équipement de communication 100 est reconfiguré, sous contrôle de l'unité de contrôle 111 exécutant le procédé selon l'invention, de sorte à autoriser une configuration à distance par l'intermédiaire de l'interface réseau 114, configurable pour une connexion à un réseau étendu de type WAN.

Selon une variante du mode de réalisation de l'invention, les clés publiques d'authentification et de chiffrement sont également transmises vers un dispositif de stockage distant tel que le dispositif de stockage 11, configuré pour le stockage de clés publiques de chiffrement. Le dispositif de stockage distant est en outre configuré pour établir une connexion à distance sécurisée avec un terminal de configuration distant ne disposant pas des clés publiques d'authentification et de chiffrement et configuré pour télécharger ces clés depuis le dispositif de stockage 11.

Avantageusement, la transmission des clés publiques d'authentification et de chiffrement au terminal de configuration distant 150 permet au terminal de configuration distant 150 d'authentifier l'équipement de communication lors d'une connexion ultérieure et de chiffrer les flux de données vers l'équipement de communication 100, de sorte à éviter toute attaque du type de l'attaque de l'homme du milieu lors des opérations de configuration à distance. Selon un mode de réalisation de l'invention, le ou les certificats transmis au terminal de configuration à distance 150, et la ou les clés publiques y afférentes, peuvent être révoqués et une nouvelle exécution du procédé de sécurisation selon l'invention est alors requise et rendue possible par le biais de l'interface de configuration graphique implémentée par le serveur web du dispositif de communication 110. Avantageusement, une reconfiguration de l'adresse IP du dispositif de communication 100 ou une modification des paramètres d'un serveur DNS dynamique ciblé par le dispositif de communication 100, entraîne une nouvelle exécution du procédé de sécurisation des flux de données selon l'invention.

Selon un mode de réalisation de l'invention, une reconfiguration en mode sortie d'usine n'efface pas le ou les certificats transmis, ni la ou les clés publiques transmises et une commande dédiée permet de procéder à leur effacement, indépendamment d'une reconfiguration en mode sortie d'usine.

Selon un mode de réalisation de l'invention, une sauvegarde de l'ensemble des paramètres peut être réalisée sur un média interne ou externe au dispositif de communication 110 et comprendre le ou les certificats, ainsi que la ou les clés publiques transmises.

L'invention ne se limite pas aux seuls modes de réalisation décrits ci-avant et s'applique plus généralement à tout procédé de sécurisation de flux de données dans un dispositif de communication configurable depuis un terminal distant, le procédé comprenant des étapes d'enregistrement d'une première clé de chiffrement dans une mémoire du dispositif, la génération, dans le dispositif de communication, à partir de la première clé, d'une clé publique et d'une clé privée en correspondance de la clé publique, puis la réception d'une requête en sécurisation émise par le terminal distant et une émission de la clé publique depuis le dispositif de communication vers le terminal distant, en réponse à la requête en sécurisation, les opérations de réception de la requête ainsi que d'émission de la clé publique étant impérativement réalisées lorsque le dispositif et le terminal sont connectés à un même réseau local privé. L'invention concerne tout dispositif mettant en œuvre un tel procédé.

## Revendications

1. Procédé de sécurisation de flux de données entre un dispositif de communication (100) et un terminal distant (150), ledit dispositif de communication (100) comprenant une première interface de communication (118, 119) pour une connexion à un premier réseau (120), local de type LAN, et une seconde interface de communication (114) pour une connexion à un second réseau (10), ledit dispositif (100) étant configurable depuis le terminal distant (150), le procédé comprenant les étapes :
- enregistrer, par ledit dispositif de communication (100), une première clé dans une mémoire dudit dispositif (100),
- générer et enregistrer, par ledit dispositif (100), une seconde clé, de chiffrement, dite clé privée, et une troisième clé, de chiffrement, dite clé publique, ladite clé publique étant insérée dans un certificat d'authenticité signé par la première clé, la clé publique étant utilisable pour le chiffrement d'un flux de données déchiffrables au moyen de la clé privée,
- recevoir, depuis le terminal distant (150), une requête en vue de sécuriser des flux de données entre ledit dispositif de communication (100) et le terminal distant (150),
- vérifier que ladite requête est reçue via ladite première interface (118, 119) pour une connexion à un premier réseau (120) local de type LAN, et,
- si ladite requête est reçue via ladite première interface (118, 119) pour une connexion à un premier réseau local (120) de type LAN, émettre, par ledit dispositif de communication (100), la clé publique vers le terminal distant (150), en réponse à la requête, et autoriser une configuration à distance dudit dispositif de communication (100) via au moins ladite seconde interface (114) à partir de flux de données chiffrées au moyen de ladite clé publique.

2. Procédé selon la revendication précédente, le procédé comprenant une étape d'authentification dudit dispositif (100) vis-à-vis du terminal distant (150) ou vice-versa.

3. Procédé selon l'une des revendications 1 ou 2, le procédé comprenant une étape de chiffrement d'un flux de données à transmettre, entre ledit dispositif (100) et le terminal distant (150), le chiffrement étant réalisé au moyen de ladite clé publique.

4. Procédé selon l'une quelconque des revendications précédentes, l'étape d'émission de la clé publique vers le terminal distant (150) comprenant en outre une émission de la clé publique vers un dispositif de stockage (11) distant.

5. Dispositif de communication (100) configurable depuis un terminal distant, (150) ledit dispositif de communication (100) comprenant une première interface de communication (118, 119) pour une connexion à un premier réseau (120), local de type LAN, et une seconde interface de communication (114) pour une connexion à un second réseau (10), ledit dispositif de communication (100) étant configuré pour :
- enregistrer une première clé dans une mémoire dudit dispositif (100),
- générer et enregistrer une seconde clé, de chiffrement, dite clé privée, et une troisième clé, de chiffrement, dite clé publique, ladite clé publique étant insérée dans un certificat d'authenticité signé par la première clé, la clé publique étant utilisable pour le chiffrement d'un flux de données déchiffrables au moyen de la clé privée,
- recevoir, depuis le terminal distant (150) une requête en vue de sécuriser des échanges entre ledit dispositif de communication (100) et le terminal distant (150),
- vérifier que ladite requête est reçue via ladite première interface (118, 119) pour une connexion à un premier réseau local de type LAN, et,
- si ladite requête est reçue via ladite première interface (118,119) pour une connexion à un premier réseau local (120) de type LAN, émettre, par ledit dispositif de communication (100), la clé publique vers le terminal distant (150), en réponse à la requête et autoriser une configuration à distance dudit dispositif de communication (100) via au moins ladite seconde interface (114), à partir de flux de données chiffrées au moyen de ladite clé publique.

6. Dispositif de communication (100) selon la revendication précédente, ledit dispositif (100) étant destiné à l'exécution de fonctions de passerelle de connexion entre ledit réseau local (120) de type LAN et un réseau étendu (10) de type WAN.

7. Dispositif de communication (100) selon l'une des revendications 5 à 6, configuré pour opérer une modification d'au moins un registre de configuration à partir de données reçues chiffrées par l'exécution d'un algorithme de chiffrement utilisant la clé publique et déchiffrables par l'exécution d'un algorithme de déchiffrement utilisant la clé privée.

8. Dispositif de communication (100) selon l'une quelconque des revendications 5 à 7, configuré pour l'implémentation d'un serveur web permettant une modification d'au moins un registre de configuration via l'utilisation d'une interface graphique affichée sur le terminal distant (150).

9. Dispositif selon la revendication précédente, l'interface graphique étant adaptée à la saisie d'une commande de sécurisation de flux de données entre ledit dispositif de communication (100) et le terminal distant (150).

10. Système de communication comprenant un dispositif de communication (100) configurable à distance et un terminal de configuration (150), ledit dispositif de communication (100) comprenant une première interface de communication (118, 119) pour une connexion à un premier réseau (120) local de type LAN, et une seconde interface de communication (114) pour une connexion à un second réseau (10), ledit dispositif de communication (100) étant configurable depuis le terminal distant (150), ledit dispositif (100) et le terminal de configuration (150) étant configurés pour être connectés à un même réseau et pour :
- enregistrer, par ledit dispositif de communication (100), une première clé dans une mémoire dudit dispositif (100),
- générer et enregistrer, par ledit dispositif (100), une seconde clé, de chiffrement, dite clé privée, et une troisième clé, de chiffrement, dite clé publique, la clé publique étant insérée dans un certificat d'authenticité signé par la première clé, la clé publique étant utilisable pour le chiffrement d'un flux de données déchiffrables au moyen de la clé privée,
- recevoir, par ledit dispositif de communication (100) et depuis le terminal de configuration (150), une requête en vue de sécuriser des échanges entre ledit dispositif de communication (100) et le terminal de configuration (150),
- vérifier, par le dispositif (100), que ladite requête est reçue via ladite première interface (118,119) pour une connexion au premier réseau (120) local de type LAN,
- si ladite requête est reçue via ladite première interface pour une connexion à un premier réseau local (120) de type LAN, émettre, par ledit dispositif de communication (100), la clé publique vers le terminal distant (150), en réponse à la requête et autoriser une configuration à distance dudit dispositif (100) via au moins ladite seconde interface (117) à partir de flux de données chiffrées au moyen de ladite clé publique.

11. Produit programme d'ordinateur, **caractérisé en ce qu'**il comprend des instructions de codes de programme pour exécuter les étapes du procédé selon la revendication 1, lorsque ledit programme est exécuté sur un ordinateur.

12. Support de stockage d'informations comprenant un produit programme d'ordinateur selon la revendication précédente.

## Patentansprüche

1. Verfahren zur Sicherung von Datenströmen zwischen einer Kommunikationsvorrichtung (100) und einem fernen Endgerät (150), wobei die Kommunikationsvorrichtung (100) eine erste Kommunikationsschnittstelle (118, 119) für eine Verbindung mit einem ersten lokalen Netz (120) des Typs LAN und eine zweite Kommunikationsschnittstelle (114) für eine Verbindung mit einem zweiten Netz (10) enthält, wobei die Vorrichtung (100) ausgehend vom fernen Endgerät (150) konfigurierbar ist, wobei das Verfahren die folgenden Schritte enthält:
- Registrieren, durch die Kommunikationsvorrichtung (100), eines ersten Schlüssels in einem Speicher der Vorrichtung (100),
- Generieren und Registrieren, durch die Vorrichtung (100), eines zweiten Verschlüsselungsschlüssels, privater Schlüssel genannt, und eines dritten Verschlüsselungsschlüssels, öffentlicher Schlüssel genannt, wobei der öffentliche Schlüssel in ein vom ersten Schlüssel signiertes Authentizitätszertifikat eingefügt wird, wobei der öffentliche Schlüssel zur Verschlüsselung eines Stroms von Daten verwendbar ist, die mittels des privaten Schlüssels entschlüsselt werden können,
- Empfangen, ausgehend vom fernen Endgerät (150), einer Anforderung mit dem Ziel der Sicherung von Datenströmen zwischen der Kommunikationsvorrichtung (100) und dem fernen Endgerät (150),
- Überprüfen, dass die Anforderung über die erste Schnittstelle (118, 119) für eine Verbindung mit einem ersten lokalen Netz (120) des Typs LAN empfangen wird,
und,
- wenn die Anforderung über die erste Schnittstelle (118, 119) für eine Verbindung mit einem ersten lokalen Netz (120) des Typs LAN empfangen wird, Senden, durch die Kommunikationsvorrichtung (100), des öffentlichen Schlüssels an das ferne Endgerät (150) als Antwort auf die Anforderung, und Erlauben einer Fernkonfiguration der Kommunikationsvorrichtung (100) über mindestens die zweite Schnittstelle (114) ausgehend von Strömen von mittels des öffentlichen Schlüssels verschlüsselten Daten.

2. Verfahren nach dem vorhergehenden Anspruch, wobei das Verfahren einen Schritt der Authentifizierung der Vorrichtung (100) gegenüber dem fernen Endgerät (150) oder umgekehrt enthält.

3. Verfahren nach einem der Ansprüche 1 oder 2, wobei das Verfahren einen Schritt der Verschlüsselung eines zwischen der Vorrichtung (100) und dem fernen Endgerät (150) zu übertragenden Datenstroms enthält, wobei die Verschlüsselung mittels des öffentlichen Schlüssels durchgeführt wird.

4. Verfahren nach einem der vorhergehenden Ansprüche, wobei der Schritt des Sendens des öffentlichen Schlüssels an das ferne Endgerät (150) außerdem ein Senden des öffentlichen Schlüssels an eine ferne Speichervorrichtung (11) enthält.

5. Kommunikationsvorrichtung (100), die ausgehend von einem fernen Endgerät (150) konfigurierbar ist, wobei die Kommunikationsvorrichtung (100) eine erste Kommunikationsschnittstelle (118, 119) für eine Verbindung mit einem ersten lokalen Netz (120) des Typs LAN und eine zweite Kommunikationsschnittstelle (114) für eine Verbindung mit einem zweiten Netz (10) enthält, wobei die Kommunikationsvorrichtung (100) konfiguriert ist:
- einen ersten Schlüssel in einem Speicher der Vorrichtung (100) zu registrieren,
- einen zweiten Verschlüsselungsschlüssel, privater Schlüssel genannt, und einen dritten Verschlüsselungsschlüssel, öffentlicher Schlüssel genannt, zu generieren und zu registrieren, wobei der öffentliche Schlüssel in ein vom ersten Schlüssel signiertes Authentizitätszertifikat eingefügt wird, wobei der öffentliche Schlüssel zur Verschlüsselung eines Stroms von Daten verwendbar ist, die mittels des privaten Schlüssels entschlüsselt werden können,
- ausgehend vom fernen Endgerät (150) eine Anforderung zum Sichern der Austauschvorgänge zwischen der Kommunikationsvorrichtung (100) und dem fernen Endgerät (150) zu empfangen,
- zu überprüfen, dass die Anforderung über die erste Schnittstelle (118, 119) für eine Verbindung mit einem ersten lokalen Netz des Typs LAN empfangen wird,
und,
- wenn die Anforderung über die erste Schnittstelle (118, 119) für eine Verbindung mit einem ersten lokalen Netz (120) des Typs LAN empfangen wird, durch die Kommunikationsvorrichtung (100) den öffentlichen Schlüssel an das ferne Endgerät (150) als Antwort auf die Anforderung zu senden, und eine Fernkonfiguration der Kommunikationsvorrichtung (100) über mindestens die zweite Schnittstelle (114) ausgehend von Strömen von mittels des öffentlichen Schlüssels verschlüsselten Daten zu erlauben.

6. Kommunikationsvorrichtung (100) nach dem vorhergehenden Anspruch, wobei die Vorrichtung (100) für die Ausführung von Gateway-Funktionen zur Verbindung zwischen dem lokalen Netz (120) des Typs LAN und einem Weitverkehrsnetz (10) des Typs WAN bestimmt ist.

7. Kommunikationsvorrichtung (100) nach einem der Ansprüche 5 bis 6, die konfiguriert ist, eine Änderung mindestens eines Konfigurationsregisters ausgehend von empfangenen Daten durchzuführen, die durch die Ausführung eines Verschlüsselungsalgorithmus unter Verwendung des öffentlichen Schlüssels verschlüsselt und durch die Ausführung eines Entschlüsselungsalgorithmus unter Verwendung des privaten Schlüssels entschlüsselbar sind.

8. Kommunikationsvorrichtung (100) nach einem der Ansprüche 5 bis 7, die für die Implementierung eines Webservers konfiguriert ist, der eine Änderung mindestens eines Konfigurationsregisters mittels der Verwendung einer auf dem fernen Endgerät (150) angezeigten graphischen Schnittstelle ermöglicht.

9. Vorrichtung nach dem vorhergehenden Anspruch, wobei die graphische Schnittstelle für die Eingabe eines Sicherungsbefehls von Datenströmen zwischen der Kommunikationsvorrichtung (100) und dem fernen Endgerät (150) geeignet ist.

10. Kommunikationssystem, das eine fernkonfigurierbare Kommunikationsvorrichtung (100) und ein Konfigurations-Endgerät (150) enthält, wobei die Kommunikationsvorrichtung (100) eine erste Kommunikationsschnittstelle (118, 119) für eine Verbindung mit einem ersten lokalen Netz (120) des Typs LAN und eine zweite Kommunikationsschnittstelle (114) für eine Verbindung mit einem zweiten Netz (10) enthält, wobei die Kommunikationsvorrichtung (100) ausgehend vom fernen Endgerät (150) konfigurierbar ist, wobei die Vorrichtung (100) und das Konfigurations-Endgerät (150) konfiguriert sind, mit einem gleichen Netz verbunden zu werden, und:
- durch die Kommunikationsvorrichtung (100) einen ersten Schlüssel in einem Speicher der Vorrichtung (100) zu registrieren,
- durch die Vorrichtung (100) einen zweiten Verschlüsselungsschlüssel, privater Schlüssel genannt, und einen dritten Verschlüsselungsschlüssel, öffentlicher Schlüssel genannt, zu generieren und zu registrieren, wobei der öffentliche Schlüssel in ein vom ersten Schlüssel signiertes Authentizitätszertifikat eingefügt wird, wobei der öffentliche Schlüssel für die Verschlüsselung eines Stroms mittels des privaten Schlüssels entschlüsselbarer Daten verwendbar ist,
- durch die Kommunikationsvorrichtung (100) und ausgehend vom Konfigurations-Endgerät (150) eine Anforderung zur Sicherung der Austauschvorgänge zwischen der Kommunikationsvorrichtung (100) und dem Konfigurations-Endgerät (150) zu empfangen,
- durch die Vorrichtung (100) zu überprüfen, dass die Anforderung über die erste Schnittstelle (118, 119) für eine Verbindung mit dem ersten lokalen Netz (120) des Typs LAN empfangen wird,
- wenn die Anforderung über die erste Schnittstelle für eine Verbindung mit einem ersten lokalen Netz (120) des Typs LAN empfangen wird, durch die Kommunikationsvorrichtung (100) den öffentlichen Schlüssel an das ferne Endgerät (150) als Antwort auf die Anforderung zu senden, und eine Fernkonfiguration der Vorrichtung (100) über mindestens die zweite Schnittstelle (117) ausgehend von Strömen von mittels des öffentlichen Schlüssels verschlüsselten Daten zu erlauben.

11. Computerprogrammprodukt, **dadurch gekennzeichnet, dass** es Programmcodeanweisungen enthält, um die Schritte des Verfahrens nach Anspruch 1 auszuführen, wenn das Programm auf einem Computer ausgeführt wird.

12. Informationsspeicherträger, der ein Computerprogrammprodukt nach dem vorhergehenden Anspruch enthält.

## Claims

1. Method for securing a data flow between a communication device (100) and a remote terminal (150), said communication device (100) comprising a first communication interface (118, 119) for a connection to a first local network (120) of the LAN type, and a second communication interface (114) for a connection to a second network (10), said device (100) being configurable from the remote terminal (150), the method comprising the steps of:
- recording, by said communication device (100), a first key in a memory of said device (100),
- generating and recording, by said device (100), a second encryption key, referred to as a private key, and a third encryption key, referred to as a public key, the public key being inserted in an authenticity certificate signed by the first key, the public key being able to be used for the encryption of a data flow that can be deciphered by means of the private key,
- receiving, from the remote terminal (150), a request with a view to securing data flows between said communication device (100) and the remote terminal (150),
- checking that said request is received via said first interface (118, 119) for a connection to a first local network (120) of the LAN type, and
- if said request is received via said first interface (118, 119) for a connection to a first local network of the LAN type, sending, by said communication device (100), the public key to the remote terminal (150), in response to the request, and enabling remote configuration of said communication device (100) via at least said second interface (114) from the data flow encrypted by means of said public key.

2. Method according to the preceding claim, the method comprising a step of authenticating said device (100) vis-à-vis the remote terminal (150) or vice versa.

3. Method according to one of claims 1 or 2, the method comprising a step of encrypting a data flow to be transmitted between said device (100) and the remote terminal (150), the encryption being performed by means of said public key.

4. Method according to any one of the preceding claims, the step of sending the public key to the remote terminal (150) further comprising a sending of the public key to a remote storage device (11).

5. Communication device (100) configurable from a remote terminal (150), said communication device (100) comprising a first communication interface (118, 119) for a connection to a first local network (120) of the LAN type, and a second communication interface (114) for a connection to a second network (10), said communication device (100) being configured:
- to record a first key in a memory of said device (100),
- to generate and record a second encryption key, referred to as a private key, and a third encryption key, referred to as a public key, said public key being inserted in an authenticity certificate signed by the first key, the public key being able to be used for the encryption of a data flow that can be deciphered by means of the private key,
- to receive, from the remote terminal (150), a request with a view to securing exchanges between said communication device (100) and the remote terminal (150),
- to check that said request is received via said first interface (118, 119) for a connection to a first local network of the LAN type, and
- if said request is received via said first interface (118, 119) for a connection to a first local network (120) of the LAN type, to send, by said communication device (100), the public key to the remote terminal (150), in response to the request and to enable a remote configuration of said communication device (100) via at least said second interface (114) from data flows encrypted by means of the public key.

6. Communication device (100) according to the preceding claim, said device (100) being intended for executing connection gateway functions between said local network (120) of the LAN type and an extended network (10) of the WAN type.

7. Communication device (100) according to one of claims 5 to 6, configured to make a modification of at least one configuration register from received data encrypted by the execution of an encryption algorithm using the public key and decipherable by the execution of a deciphering algorithm using the private key.

8. Communication device (100) according to any one of claims 5 to 7, configured for implementing a web server allowing modification of at least one configuration register via the use of a graphical interface displayed on the remote terminal (150).

9. Device according to the preceding claim, the graphical interface being adapted for entering a command for securing data flows between said communication device (100) and the remote terminal (150).

10. Communication system comprising a remotely configurable communication device (100) and a configuration terminal (150), said communication device (100) comprising a first communication interface (118, 119) for a connection to a first local network (120) of the LAN type, and a second communication interface (114) for a connection to a second network (10), said communication device (100) being configurable from the remote terminal (150), said device (100) and the configuration terminal (150) being configured for being connected to the same network and for:
- recording, by said communication device (100), a first encryption key in a memory of said device (100),
- generating and recording, by said device (100), a second encryption key, referred to as a private key, and a third encryption key, referred to as a public key, the public key being inserted in an authenticity certificate signed by the first key, the public key being able to be used for the encryption of a data flow that can be deciphered by means of the private key,
- receiving, by said communication device (100) and from the configuration terminal (150), a request with a view to securing exchanges between said communication device (100) and the configuration terminal (150),
- checking, by the device (100), that the request is received via said first interface (118, 119) for a connection to the first local network (120) of the LAN type,
- if said request is received via said first interface for a connection to a first local network (120) of the LAN type, sending, by said communication device (100), the public key to the remote terminal (150), in response to the request, and enabling a remote configuration of said device (100) via at least said second interface (117) from data flows encrypted by means of said public key.

11. Computer program product, **characterised in that** it comprises program code instructions for executing the steps of the method according to claim 1, when said program is executed on a computer.

12. Information storage medium, comprising a computer program product according to the preceding claim.
